# FASCICULE DE BREVET EUROPEEN

(11) **EP 0 650 933 B1**
(45) Date de publication et mention de la délivrance du brevet: **02.06.1999**
(21) Numéro de dépôt: 94402430.6
(22) Date de dépôt: 27.10.1994
(51) Int. Cl.: C03B 5/187, C03B 5/20, C03B 7/02, C03B 7/06

(54) **Canal de transfert et de conditionement de verre en fusion**
Kanal zum Transportieren und Konditionieren von geschmolzenem Glas
Transfering and conditioning channel for molten glas

(30) Priorité: 02.11.1993 FR 9313022
(43) Date de publication de la demande: 03.05.1995
(73) Titulaire: SAINT-GOBAIN VITRAGE, 92400 Courbevoie (FR)
(72) Inventeur: Moreau, Raymond, F-78290 Croissy Sur Seine (FR); Gobert, Roger, F-78810 Feucherolles (FR); Jeanvoine, Pierre, F-78300 Poissy (FR)
(74) Mandataire: Renous Chan, Véronique

(56) Documents cités:
- EP-A- 0 304 371
- EP-A- 0 512 900
- EP-A- 0 616 983
- DE-A- 3 119 816
- FR-A- 2 195 597
- FR-A- 2 195 598
- FR-A- 2 220 480
- US-A- 3 294 512
- US-A- 3 723 084

## Description

L'invention concerne un canal d'écoulement pour le transfert et le conditionnement de verre en fusion d'une zone de fusion/affinage de verre fondu alimentée en matières vitrifiables à une zone de formage de verre plat.

Un tel canal s'insère plus spécialement dans la structure des dispositifs appelés communément fours de fusion et qui sont destinés à fournir en continu en verre fondu des installations de formage de verre. Ainsi l'invention concerne aussi un four comportant un tel canal. Ce four pourrait être spécialement conçu pour l'alimentation en continu en verre fondu des installations de formage de verre plat du type installations float, et ainsi l'invention concerne aussi une utilisation du canal ou du four dans ce but.

Pour fondre les matières vitrifiables puis conditionner le verre fondu afin qu'il présente la qualité requise, et notamment une bonne homogénéité chimique et thermique, de tels fours se présentent sous la forme de compartiments successifs débouchant les uns dans les autres et ayant chacun des fonctions bien précises.

Il est ainsi connu du brevet EP-B-0 304 371 un four comprenant un premier compartiment où s'effectue la fusion des matières vitrifiables, compartiment suivi d'un autre, formant goulot d'étranglement, désigné sous le terme de corset et qui débouche dans un compartiment appelé braise destiné à conditionner le verre. Ce compartiment déverse ensuite le verre ainsi homogénéisé dans un canal d'écoulement dont la fonction se cantonne à transférer le verre vers l'installation de formage.

Un tel type de four, s'il permet de fournir un verre de qualité élevée, n'est cependant pas dépourvu de certains inconvénients : d'une part sa structure même n'est pas très simple de conception puisqu'elle implique pas moins de quatre compartiments distincts de dimensions très différentes. D'autre part, le compartiment appelé braise où s'effectue le conditionnement du verre est dimensionné de manière à générer volontairement une courroie de recirculation convective du verre dans le compartiment de fusion, c'est-à-dire un courant dit "de retour" qui, s'il optimise le conditionnement du verre en augmentant son temps de séjour dans le four, implique également un effort de chauffe considérable au niveau du compartiment de fusion, où recircule en permanence du verre de température moins élevée provenant de la braise.

Il est par ailleurs connu du brevet US-A-3 294 512 un four dont le compartiment de fusion débouche dans un compartiment assurant à la fois le transfert et le conditionnement du verre fondu et dont les dimensions définissent une profondeur de verre suffisamment restreinte pour empêcher la formation d'un courant de verre convectif. On peut cependant se demander si le conditionnement du verre ainsi réalisé est suffisant ; ce four étant cependant conçu de manière à favoriser la création de courants convectifs au sein du verre mais dans le compartiment de fusion, à proximité de la jonction avec le compartiment de conditionnement.

Le but de l'invention est de pallier ces inconvénients en proposant un nouveau type de conditionnement de verre en fusion, qui garantisse la fourniture d'un verre de qualité élevée et qui ne soit cependant pas pénalisant en termes de coût de construction et/ou de coût de fonctionnement du four au sein duquel s'effectue ledit conditionnement.

L'invention a pour objet un canal d'écoulement et de conditionnement de verre fondu comprenant chenal et superstructure et destiné à transférer le verre d'une zone de fusion/affinage alimentée en matières vitrifiables à une zone de formage afin d'amener le verre de sa température de fusion à sa température de formage. Ledit canal est conçu de manière à comporter une pluralité de zones successives disposées substantiellement transversalement par rapport à son axe longitudinal, chaque zone ayant sa fonction propre, étant régulée thermiquement de manière autonome et étant isolée des zones adjacentes sur une partie de sa hauteur par des moyens de séparation. Ces moyens peuvent notamment prendre la forme d'écrans suspendus à la voûte, de murs d'ombre, d'arcs sur-baissés ou même de barrages suspendus immergés partiellement dans la profondeur du verre fondu.

Cette succession de zones comprend au moins une zone de transition, au moins une zone de drainage destinée à extraire du verre toute impureté du type verre pollué par la présence d'infondus ou d'inclusions provenant de matériau réfractaire.

Est également à prévoir au moins une zone de refroidissement destinée à diminuer globalement la température du verre provenant de la zone de fusion, ceci afin de lui conférer la température appropriée pour alimenter l'installation de formage.

Le canal en question comprend également au moins une zone d'homogénéisation thermique et/ou chimique destinée à réduire la présence de gradients de température dans le verre et/ou la présence de différentes "veines" de verre légèrement différentes chimiquement les unes des autres.

La zone spécifique dite de transition peut être disposée entre le reste du canal et le compartiment "amont" qui débouche dans celui-ci, compartiment "amont" notamment constitué du compartiment de fusion/affinage. Cette zone de transition peut ainsi permettre, de par ses caractéristiques structurelles, d'optimiser la vitesse du verre provenant de ce compartiment amont et qui arrive dans le canal.

De fait, la conception d'un four avec un tel canal reste, de manière globale, relativement simple, puisque l'on peut faire déboucher le compartiment de fusion directement dans ce canal, canal qui assure conjointement le transfert et le conditionnement du verre.

Par ailleurs, segmenter ce canal en différentes zones permet de rationaliser le conditionnement. Le conditionnement se trouve en effet décomposé en plusieurs opérations complémentaires, telles qu'un refroidissement, une égalisation thermique, une homogénéisation chimique, un drainage ou une optimisation de la vitesse d'écoulement du verre, chacune des zones du canal étant affectée spécifiquement à au moins une de ces opérations.

Chacune de ces opérations peut être ainsi maîtrisée, ajustée au mieux, indépendamment des autres, ce qui rend le conditionnement du verre très modulable et souple suivant les besoins, ce caractère modulable étant renforcé par le fait que les zones ont chacune une régulation thermique indépendante et sont partiellement "étanches" par rapport aux autres, au moins en ce qui concerne l'atmosphère définie dans chacune des zones entre le niveau de verre et la voûte.

Avantageusement, les dimensions du canal sont sélectionnées de manière à éviter la formation d'une courroie de recirculation convective du verre dans la zone de fusion, notamment en limitant la profondeur de verre dans le canal.

L'absence de cette courroie de recirculation permet d'envisager une réduction sensible du coût énergétique de fonctionnement du four, puisqu'elle supprime de fait le problème de la pénétration de verre "plus froid" dans le compartiment de fusion provenant du compartiment de conditionnement, ce qui nécessite un apport thermique considérable au niveau du compartiment de fusion accompagné d'efforts de calorifugeage importants. Il est à noter également qu'on diminue ainsi notablement l'inertie du four et que l'on peut passer beaucoup plus rapidement de la fabrication d'un verre à l'autre, par exemple d'un verre clair à un verre nettement plus foncé.

Cependant, les avantages économiques liés à cette absence de courroie de recirculation ne s'obtiennent pas au détriment de la qualité du conditionnement du verre, grâce à la segmentation en zones fonctionnalisées spécifiques du canal, segmentation qui permet de contrôler le conditionnement et d'intervenir très vite au niveau de chacune de ces zones pour l'ajuster au mieux.

Structurellement, le canal selon l'invention présente de préférence une paroi inférieure sensiblement plane et ne présentant ainsi pas de seuil entre les diverses zones qui le composent. Il présente également de préférence au moins une, et notamment seulement une, modification de section, modification de section qui peut être localisée à la jonction entre la zone la plus "amont" du canal et la zone suivante. Cette modification, notamment une réduction, de section est souhaitable tout particulièrement pour permettre d'optimiser la vitesse d'écoulement du verre entrant dans le canal. Cependant, le canal selon l'invention reste globalement simple de conception.

Les termes "amont" ou "aval" se rapportent dans toute la présente description au sens d'écoulement du flux de verre traversant le canal.

Le canal selon l'invention comporte avantageusement une zone "la plus amont" appelée ci-après "avant-canal", dont la fonction principale est de contrôler la vitesse du verre entrant dans le canal. Pour ce faire, et comme précédemment évoqué, elle présente une section plus importante que celle des zones suivantes. Sa section peut ainsi se trouver être de taille "intermédiaire" entre celle des zones plus aval du canal et celle du compartiment de fusion placé juste en amont. De fait, elle fait un peu office de zone "tampon" régulatrice, qui évite tout phénomène d'aspiration trop rapide du verre fondu provenant du compartiment de fusion dans le canal, ceci afin d'éviter toute perturbation dans le système d'écoulement du verre dans le compartiment qui se trouve en amont du canal, notamment le compartiment de fusion/affinage.

L'avant-canal peut en outre être muni de premiers moyens de drainage, notamment de drainage de surface, disposés dans l'avant-canal et conçus de manière à affecter tout particulièrement les veines latérales du flux de verre. Il peut s'agir de niches d'écrémages associées à des drains de surface et placées avantageusement aux extrêmités de deux branches d'écoulement disposées de part et d'autre de l'avant-canal, ces branches pouvant également faire éventuellement office de déversoirs de trop-plein.

Si le canal a notamment pour but d'abaisser globalement la température du verre pour le rendre apte au formage, par exemple de l'ordre d'au moins 150°C , ce refroidissement doit être progressif et la température du verre est donc soigneusement contrôlée tout au long du canal.

Par ailleurs, la température du verre conditionne au moins en partie l'importance et la nature des courants de convection qui l'animent.

Ainsi, l'avant-canal qui, comme déjà mentionné, est une zone de transition entre le compartiment de fusion et le reste du canal, est avantageusement muni de moyens de chauffe auxiliaires. Ces moyens sont notamment constitués de brûleurs disposés en deux rangées symétriques par rapport à l'axe longitudinal du canal, brûleurs dont on peut moduler la puissance de chauffe selon les besoins.

Le canal comporte aussi au moins une zone de drainage, drainage supplémentaire à celui effectué dans l'avant-canal. Cette zone de préférence succède à l'avant-canal et est munie de moyens de drainage qui peuvent avantageusement être conçus de manière à affecter plus particulièrement la veine centrale du flux de verre et, de fait, compléter ainsi le drainage des veines latérales effectué auparavant dans l'avant-canal.

Les moyens de drainage comportent un drain de surface avantageusement associé à un dispositif d'entraînement à rotation lente immergé dans la profondeur du verre et à un barrage déflecteur apte à être au moins partiellement immergé dans la profondeur du verre. De fait, la configuration optimale pour obtenir un drainage efficace consiste à placer le barrage, de préférence incliné d'un angle différent de 90° par rapport à l'axe longitudinal du canal, en aval du drain et du dispositif d'entraînement dont on choisit de manière adéquate le sens et la vitesse de mouvement de rotation : le dispositif d'entrainement tend ainsi à accumuler le verre pollué de surface dans un des angles que fait le barrage avec les parois latérales du canal, zone bien localisée d'où il sera facile de le prélever par le drain de surface.

Le canal comprend également au moins une zone affectée spécifiquement au refroidissement du verre, et de préférence en comporte trois successivement. Leur rôle est, comme déjà évoqué, d'abaisser la température du verre en supprimant, ou au moins en réduisant, les gradients thermiques qui peuvent exister tout particulièrement selon un axe perpendiculaire à l'axe d'écoulement du verre.

En effet, le verre a tendance naturellement à présenter une température moins élevée "sur ses bords", c'est-à-dire à proximité des parois latérales du canal. Le mieux est donc de concentrer le refroidissement sur la partie médiane du flux de verre et de refroidir de manière beaucoup plus modérée ou même de réchauffer ses parties latérales.

Pour refroidir le verre dans sa partie médiane, chacune des zones de refroidissement peut utiliser un ou plusieurs des moyens de refroidissement suivants, chacun ayant ses avantages spécifiques :

Un premier moyen consiste à ventiler la zone de refroidissement, en introduisant par la voûte, à l'intérieur du canal, un gaz comme de l'air à température pré-déterminée. Le gaz est ensuite de préférence amené à circuler suivant un trajet sensiblement parallèle à l'axe longitudinal du canal, afin d'agir surtout sur la partie médiane du verre. Cependant, il est préférable qu'il n'y ait pas de contact trop direct et brutal entre le gaz de refroidissement et le verre, et donc de le faire circuler le plus possible à une certaine distance du niveau de verre.

On peut ainsi utiliser, en les adaptant si besoin est, les moyens de ventilation longitudinale décrits dans le brevet FR-B-2 220 480.

On peut également prévoir un autre moyen de refroidissement, sans recourir à une ventilation conduisant à l'introduction de gaz perturbateurs dans l'atmosphère du canal. Ainsi, la voûte peut être refroidie de l'extérieur, par exemple par circulation d'un fluide refroidissant, gaz ou liquide, dans son épaisseur même. Le circuit de circulation du fluide dans la voûte est conçu par exemple avec une pluralité de points d'injection dans la paroi externe de la voûte et situés de préférence sur son axe médian, chacun de ces points d'injection étant relié par des conduits à des orifices d'évacuation également pratiqués dans la paroi externe de la voûte.

Faire ainsi circuler le fluide de refroidissement dans l'épaisseur d'au moins une paroi du canal, tout particulièrement la voûte, à l'intérieur d'une structure alvéolaire disposée dans son épaisseur permet de refroidir le verre non plus par convection, mais par rayonnement : il s'agit en effet d'un refroidissement agissant sur la voûte elle-même qui répercute en partie cet abaissement de température sur le verre par rayonnement.

La circulation du fluide en question dans l'épaisseur de la paroi peut par exemple se faire soit selon un axe sensiblement parallèle à l'axe longitudinal du canal, soit selon un axe sensiblement perpendiculaire à celui-ci, en affectant cependant essentiellement la veine centrale du verre, et non ses bords.

Chacun des modes de refroidissement, ventilation ou refroidissement de paroi "externe", présente des avantages: Ventiler permet un refroidissement du verre rapide, efficace, mais qui peut risquer d'être un peu brutal. Par contre, refroidir de l'extérieur les parois est beaucoup plus progressif et permet de contrôler totalement la teneur de l'atmosphère au-dessus du verre fondu dans le canal (ce qui peut s'avérer très intéressant lorsqu'on fabrique les verres spéciaux). Cependant, ce refroidissement "externe" présente une certaine inertie, ce qui n'est pas toujours favorable si les conditions de fabrication sont amenées à se modifier dans le temps assez fréquemment.

Le mieux est alors de combiner ces deux modes de refroidissement.

On gagne ainsi en souplesse en pouvant les "activer" plus ou moins, en alternance ou simultanément. On peut équiper chaque zone de refroidissement d'un mode de refroidissement donné ou les équiper des deux modes de refroidissement à la fois. Toutes les combinaisons sont possibles.

Par ailleurs, au moins une des zones de refroidissement est munie avantageusement de moyens de réchauffage latéraux, moyens disposés soit au niveau des parois latérales du chenal, soit sur les bords de la voûte. Ils peuvent prendre la forme des brûleurs standards dits "de rive" qui en général peuvent réchauffer des largeurs de verre de l'ordre du centimètre ou au plus de la dizaine de centimètres. Il peut aussi s'agir de brûleurs dits à flamme plate qui sont conçus de manière à former des flammes qui vont longer les parois où ils sont installés plutôt que frapper directement la surface du flux de verre. Les brûleurs réchauffent ainsi indirectement le verre par rayonnement des parois et peuvent aisément le réchauffer sur une largeur beaucoup plus significative, par exemple de plusieurs dizaines de centimètres de chaque côté.

On peut aussi choisir d'utiliser des tubes radiants, débouchant par exemple d'ouvertures pratiquées dans les parois latérales et que l'on peut "enfoncer" plus ou moins profondément dans le canal afin de moduler la largeur de verre soumise à la chauffe. Peuvent aussi être utilisés des moyens de chauffe électriques, par exemple des électrodes immergées sur les bords du flux de verre, ou tout autre moyen.

L'intérêt de ces différents dispositifs est que soit ils sont complètement dépourvus de flammes, soit ils génèrent des flammes mais qui ne frappent pas directement le verre.

Qu'il s'agisse de refroidir ou de réchauffer le verre localement, il est ainsi préférable que cette modification de température s'opère de manière non brutale, essentiellement par rayonnement des parois.

La ou les zones de refroidissement sont avantageusement suivies d'une zone d'égalisation en température destinée à supprimer les gradients thermiques qui ont subsisté ou qui auraient été créés par le refroidissement opéré dans les zones précédentes. C'est dans cette zone que sont utilisés judicieusement les moyens de refroidissement et/ou de réchauffage du type de ceux déjà décrits. On peut ainsi, par exemple, combiner l'utilisation d'une ventilation par de l'air plus ou moins préchauffé et éventuellement l'utilisation de moyens de réchauffage latéraux si le besoin s'en fait sentir. On peut noter que si l'on choisit dans l'ensemble du canal à la fois un mode de refroidissement sans ventilation et un mode de chauffage sans flammes du type tubes radiants, on peut alors contrôler complètement l'atmosphère du canal, par exemple imposer une atmosphère d'azote, ce qui est avantageux pour pouvoir fabriquer des verres dits "spéciaux".

Dans la partie la plus "aval" du canal, est prévue de préférence une zone finale de drainage, notamment pour la veine de verre inférieure au contact de la sole, et d'homogénéisation, de manière à assurer une dernière purification du verre avant qu'il ne s'écoule par une lèvre de déversement hors du canal, lèvre de section plus réduite. Cette zone est ainsi équipée d'un drain de fond tel qu'une fente pratiquée dans la sole. Pour rendre la purge plus efficace, le drain est avantageusement disposé juste en amont d'un talon disposé sur la sole qui permet de collecter au mieux les impuretés. En aval de ce drain de fond, sont disposés avantageusement une pluralité d'agitateurs destinés à parfaire l'homogénéité du verre.

Cette zone d'homogénéisation peut également comporter, en aval du drain de fond et des agitateurs, un moyen de régulation de perte de charge induite par le flux de verre. Il s'agit par exemple d'un barrage dont on peut régler à volonté la profondeur d'immersion dans le verre.

L'invention a aussi pour objet un four pour la fusion de matières vitrifiables comportant une zone de fusion/affinage de matières vitrifiables et un canal comme spécifié ci-dessus, lequel peut donc se trouver directement ou non entre le compartiment de fusion/affinage et la zone de formage.

L'avant-canal, zone de transition, peut à la fois présenter une section intermédiaire, comme déjà mentionné, et se trouver, ainsi que le reste du canal, sur-élevé par rapport au compartiment de fusion.

Le compartiment de fusion en lui-même peut être à flammes.

Un moyen de chauffe peut ainsi consister en une pluralité de brûleurs à oxygène, sans fonctionnement en inversion ni utilisation de régénérateurs, la combustion à l'oxygène offrant un meilleur rendement thermique qu'une combustion avec des brûleurs conventionnels utilisant l'air comme carburant, diminuant le volume des fumées de combustion ainsi que la quantité de gaz polluants à retraiter du type NO_{X}. Une conception avantageuse de four équipé, dans son compartiment de fusion, de brûleurs à oxygène est décrite dans la demande de brevet français FR-A-27 119 81. Dans ce cas, il est préférable que, si ce compartiment débouche directement dans le canal selon l'invention, les brûleurs qui peuvent équiper l'avant-canal soient eux aussi des brûleurs à oxygène. Ainsi, lorsqu'il n'y a pas de moyen pour étanchéifier totalement l'atmosphère du compartiment de fusion/affinage par rapport à celle de l'avant-canal, on élimine le risque de voir de l'air pénétrer dans le compartiment de fusion/affinage provenant de l'avant-canal. Notamment dans le cas où sont prévus dans les zones de refroidissement du canal selon l'invention des moyens de refroidissement par ventilation, il est aussi important de prévoir des moyens pour étanchéifer l'atmosphère de ces zones, et du canal en général, par rapport à celle du compartiment de fusion/affinage. Ces moyens peuvent prendre la forme d'écrans suspendus à la voûte et affleurant le niveau de verre ou, mieux, d'un barrage suspendu partiellement immergé dans le verre. Le barrage-déflecteur précédemment décrit pour faciliter le drainage de la veine centrale du verre dans la zone de drainage adjacente à l'avant-canal peut très avantageusement remplir ce rôle.

Un mode de chauffe différent du compartiment de fusion/affinage peut également être envisageable, notamment en prévoyant un compartiment intermédiaire approprié entre le compartiment de fusion/affinage et le canal selon l'invention.

L'utilisation du canal, et du four qui le comporte, est particulièrement indiquée pour alimenter en verre fondu une installation de formage de verre plat du type installation float.

D'autres caractéristiques et avantages de l'invention apparaîtront dans la description complémentaire ci-après d'un mode de réalisation non limitatif, à l'aide des figures suivantes qui représentent :
- **figure 1** : une vue en coupe longitudinale du canal,
- **figure 2** : une vue en plan du canal,
- **figure 3** : une vue en coupe longitudinale d'une zone de refroidissement du canal,
- **figure 4** : une vue en coupe transversale d'une zone de refroidissement du canal.
- **figure 5** : une vue en plan d'une zone d'homogénéisation du canal.

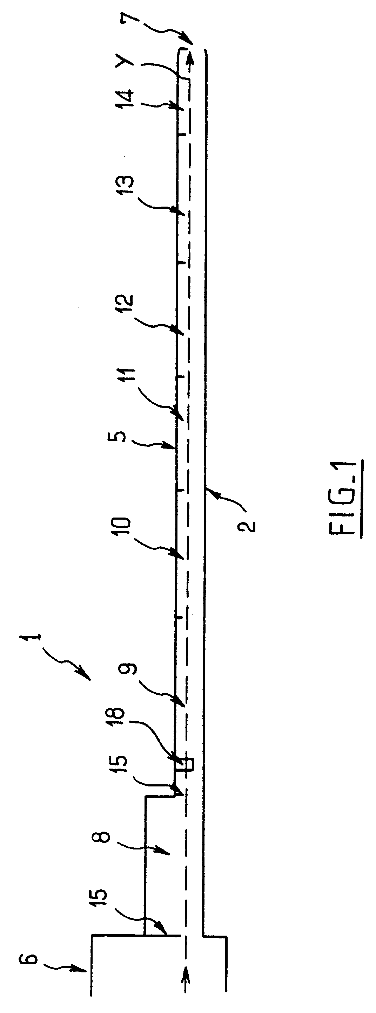

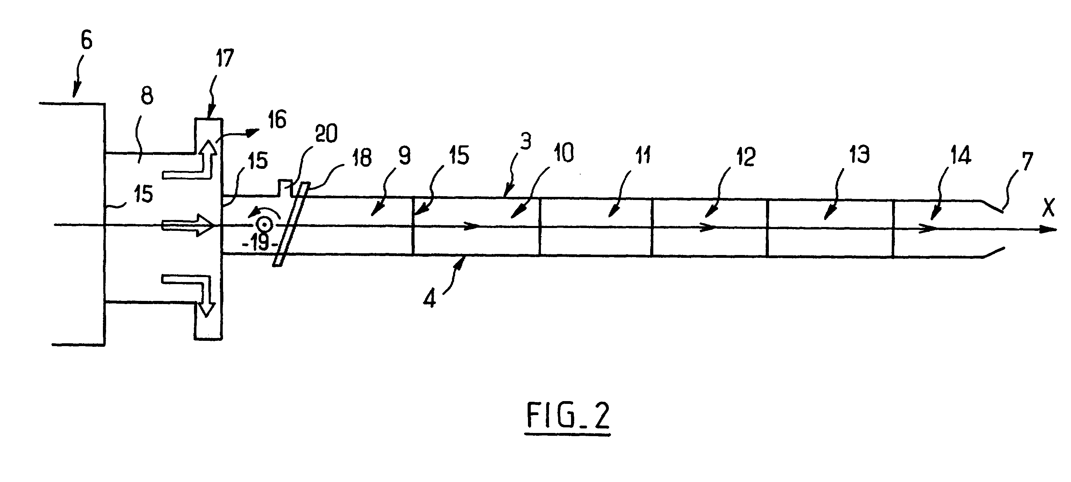

Les figures 1 et 2 représentent de manière très schématique un canal 1 de transfert et de conditionnement conforme à l'invention. Ce canal comporte un chenal délimité par une sole 2, des parois latérales 3, 4 et une voûte 5. Le verre s'y écoule selon l'axe longitudinal X du canal. Il provient d'un compartiment de fusion 6 dont seule l'extrémité "aval" est représentée, et se déverse dans la zone la plus "aval" du canal Y par une lèvre de déversement 7 alimentant en continu en verre fondu un dispositif de formage de verre plat telle qu'une installation float, non représenté.

La sole 2 du canal 1 est approximativement plane et horizontale tout au long de ce dernier. Les parois latérales 3, 4 sont substantiellement verticales. La voûte 5 est plane ou cintrée.

Le niveau de verre fondu dans le canal 1 est indiqué par la ligne Y en traits discontinus.

La section du canal 1 est approximativement constante sur toute sa longueur sauf dans sa zone 8 la plus aval dite avant-canal, qui présente une section, et notamment une largeur, intermédiaire entre celle du compartiment de fusion 6 et celle du reste du canal 1. Sa hauteur mesurée entre sole et clé de voûte est également intermédiaire.

Cet avant-canal 8 constitue la première zone du canal 1, qui, de part ses dimensions, est apte à optimiser la vitesse d'écoulement de verre entrant dans le canal 1. Par ailleurs, cet avant-canal 18, et plus généralement l'ensemble du canal 1, présente un seuil, sa sole se trouvant sur-élevée par rapport à celle du compartiment de fusion 6. Un choix approprié dans tous ces dimensionnements permet de supprimer tout courant convectif de retour du verre dans le canal 1 vers le compartiment de fusion 6, ce qui génère des économies énergétiques significatives au niveau du compartiment de fusion 6 et ce qui réduit l'inertie du four.

On décrit maintenant une à une les différentes zones 8 à 14 du canal 1, de l'amont vers l'aval en référence au sens d'écoulement du verre indiqué par l'axe X :

L'avant-canal 8 est isolé du compartiment de fusion 8 et de la zone 9 suivante du canal 1 par des écrans 15 suspendus à la voûte et dont la partie la plus basse est proche du niveau de verre fondu Y. Toutes les zones 9 à 14 du canal qui suivent sont également séparées les unes des autres par ce type d'écran 15.

Cet avant-canal 8 est muni de deux branches d'écoulement 16 transversales par rapport à l'axe X, où se logent des nichés d'écrémage 17 de forme appropriée associées à des drains de surface.

Ce drainage de surface s'avère particulièrement efficace pour éliminer des veines latérales du flux de verre, tous les infondus ou verre pollué ou léger qui se trouvent en surface. En effet, les branches d'écoulement 16 sont disposées dans l'avant-canal 18 juste en amont de la jonction de cet avant-canal avec la zone suivante, c'est-à-dire juste avant la diminution brusque de section du canal. C'est donc principalement le verre qui se trouve "sur les bords" et non la veine centrale, qui va être principalement entraîné, "poussé" vers les branches d'écoulement puis drainé, grâce aux niches d'écrémage 17, du fait même de la géométrie de la section du canal dans cette zone. L'importance de la diminution de la section dans la jonction entre ces deux zones va donc dicter la largeur de verre, qui de chaque côté de l'axe X, va se trouver soumise à ce drainage de surface.

Cet avant-canal est en outre muni de brûleurs standards, par exemple des brûleurs fuel-air, qui ne sont pas représentés, et qui sont disposés au niveau des parois latérales, à une distance suffisante du niveau de verre pour éviter tout contact direct entre flammes et verre. Ces brûleurs peuvent également fonctionner à l'oxygène dans le cas où la chauffe dans le compartiment de fusion 6 est également assurée par des brûleurs à oxygène.

La zone 9 est une zone de drainage complémentaire, équipée d'un barrage 18 suspendu à la voûte 5 et qui pénètre partiellement dans la profondeur du flux de verre. Les matériaux qui constituent le barrage sont choisis de manière à être particulièrement résistants à la corrosion et son mode de fixation est adapté pour que l'on puisse le substituer par un autre, si nécessaire, rapidement. Ce barrage 18 est légèrement incliné par rapport à la transversale à l'axe du canal 1. Juste en amont sont disposés un dispositif d'entraînement à mouvement de rotation lente dans le sens trigonométrique 19 et un drain de surface 20.

Les impuretés de surface qui n'auraient pas été drainées dans l'avant-canal 8 par les niches d'écrémage 17, du fait de leur présence dans la veine centrale du flux de verre, se trouvent ainsi "piégées" de manière efficace : le dispositif 19, par son mouvement de rotation lent dans un sens bien spécifique, entraîne ces impuretés contre le barrage 18, de manière à ce que ces impuretés s'accumulent dans l'angle aigu que forme le barrage 18 avec l'une des parois latérales du canal, zone d'où il sera facile de les prélever par le drain de surface 20.

Il est ainsi très avantageux de prévoir successivement plusieurs moyens de drainage complémentaires qui agissent chacun sur une portion donnée du flux de verre, de manière à garantir une élimination optimale de toutes les impuretés de surface.

Les trois zones 10, 11, 12 qui suivent sont des zones dites de refroidissement dont la fonction est de réduire, en final, la température moyenne du verre de l'ordre de 150 à 250°C, à la fois de manière la plus efficace et la moins "perturbante" possible, afin de ne pas créer des défauts ou des inhomogénéités thermiques supplémentaires.

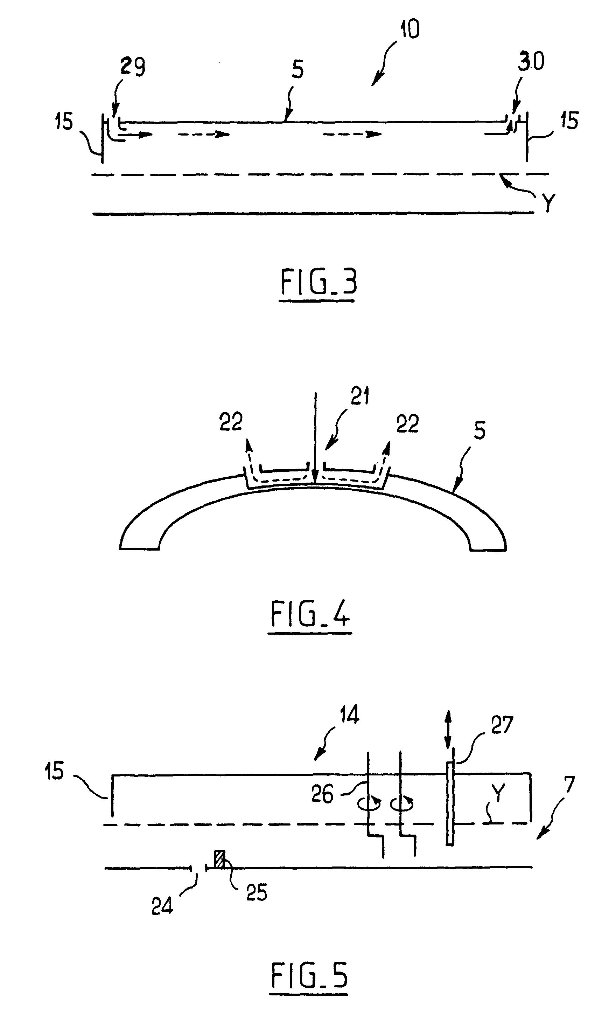

Ces zones sont équipées chacune d'au moins un des moyens de refroidissements suivants, à l'aide des figures 3 et 4, moyens destinés à refroidir essentiellement la partie médiane du flux de verre, soit la partie qui présente une température en général plus élevée que le reste du flux de verre.

Un premier moyen est une ventilation par introduction de gaz, par exemple de l'air à température ambiante ici, comme montré à la figure 3 : l'air est introduit par un conduit 29, pratiqué dans la voûte, conduit coudé de manière à ce que l'air injecté circule de préférence à proximité de la voûte 5, selon le sens d'écoulement du verre. L'air est ensuite évacué par des ouvertures 30 toujours pratiquées dans la voûte 5, évacuation facilitée par le fait que ces ouvertures se trouvent juste en amont de l'écran suspendu 15 qui fait ainsi office de barrage aux gaz entre deux zones adjacentes. Ce courant d'air est donc si possible tenu à distance de la surface du verre, et refroidit à la fois directement le verre par convection et la voûte qui, par contre-coup, tend à refroidir le verre par rayonnement.

Un second moyen de refroidissement dit "extérieur" consiste à refroidir la voûte 5 en faisant circuler dans son épaisseur un fluide de refroidissement, ici de l'air à température ambiante. A la figure 4, on voit aussi qu'on peut injecter de l'air dans un conduit 21 médian, conduit qui fait circuler l'air dans la voûte avant de l'évacuer par des orifices extérieurs 22 latéraux disposés soit sur le même axe transversal que le point d'injection 21, soit beaucoup plus en aval que celui-ci. Peut être également prévue une circulation longitudinale ou transversale de fluide de refroidissement au travers de toute structure alvéolaire, structure favorisant les échanges thermiques entre fluide et voûte.

De manière optimale, on équipe les zones de refroidissement chacune à la fois avec un moyen de ventilation et un moyen de refroidissement externe de la voûte. En les mettant en oeuvre conjointement ou en alternance, on peut moduler au mieux l'intensité du refroidissement selon la tirée, le type de verre, etc...

Chaque zone de refroidissement peut aussi être affectée à un type de refroidissement donné.

Au moins une des zones de refroidissement est également munie de moyens de réchauffage des "bords" du flux de verre, c'est-à-dire du verre qui se trouve proche de chacune des parois latérales 3, 4 du canal 1. Ces moyens sont par exemple des brûleurs standards dits de rive et placés au niveau des parois latérales, ou des tubes radiants qui débouchent également à ce niveau. Ils peuvent aussi être des brûleurs dits à flamme plate disposés sur les bords de la voûte 5, brûleurs conçus de manière à ce que les flammes restent tangentielles à la voûte. Les brûleurs à flamme plate et les tubes radiants adéquats sont commercialisés par exemple par les sociétés Four Industriel Belge F.B.I et Pyronics.

Ces moyens peuvent bien sûr être combinés. En effet, ils ont chacun leurs avantages : les brûleurs de rive sont simples et bien connus mais en général ont une capacité de chauffe limitée. Les brûleurs à flamme plate peuvent chauffer une largeur de verre plus importante, et les tubes radiants sont les plus modulables de manière simple : il suffit de régler leur taille et, de l'extérieur, de les enfoncer plus ou moins profondément dans le canal au-dessus du niveau de verre grâce à des ouvertures pratiquées dans les parois latérales 3, 4.

La zone 13 qui suit est une zone d'égalisation thermique dont le but est de supprimer tout gradient thermique résiduel dans le verre, notamment transversalement par rapport à son axe d'écoulement. Son isolation thermique est renforcée, notamment au niveau de la voûte. Peuvent y être installés tous les moyens de refroidissement et/ou réchauffage précédemment décrits, seuls ou en combinaison, leur fonctionnement étant ajusté en permanence en fonction des besoins, besoins qui sont pris en compte par des instruments de mesure, notamment thermique, permettant d'évaluer la température du verre en différents points à tout moment.

De préférence, cette zone est équipée de moyens de ventilation ou de refroidissement utilisant des fluides dont la température est modulable, et de moyens de réchauffage latéraux comme des tubes radiants.

La zone 14 est la zone d'homogénéisation finale. Elle est munie d'un drain de fond constitué par une fente 24 transversale ménagée dans la sole, placée juste en amont d'un talon 25 fixé à la sole 2. Les impuretés du type inclusions provenant de matériau réfractaire se trouvent ainsi bloquées par ce talon et efficacement prélevées de ce fait au niveau de la fente 24 servant de purge. Sont également prévus éventuellement des moyens de réchauffage ainsi qu'au moins une rangée transversale d'agitateurs 26. Tout agitateur de type connu peut être utilisé ; notamment on peut prévoir des agitateurs suspendus à la voûte, sous forme de manivelles constituées d'une partie active formée de cylindres verticaux placés au bout de bras issus d'axes verticaux, agitateurs connus sous le terme anglais "stirrer". Peuvent aussi être utilisés, seuls ou en combinaison avec les précédents, d'autres agitateurs comme ceux connus sous le terme anglais "blender" qui, de par leur conception, confèrent au verre un mouvement non plus circulaire mais hélicoïdal, donc plus efficace puisqu'agissant sur la profondeur du flux de verre.

Les agitateurs 26 sont mis en rotation à l'aide de moteurs non représentés, ils sont placés après le drain de fond 24 afin de ne pas perturber l'opération de drainage.

En dernier lieu, cette zone est équipée en aval du drain 24 et des agitateurs 26 d'un barrage 27 qui plonge dans le verre sur une profondeur réglable, ceci afin de réguler la perte de charge due à l'écoulement du verre, notamment en fonction de la tirée à obtenir.

Donc, en fin de parcours du canal 1, le verre fondu, homogène thermiquement et chimiquement et drainé au fond, en surface et sur toute sa largeur, se déverse avec le débit voulu par la lèvre de déversement 7 de section réduite.

En termes de dimensions, toutes les zones ont de préférence des longueurs à peu près similaires, sauf la première zone 8 dite avant-canal qui peut être un peu plus longue.

En termes de matériaux de construction de ce canal, on sélectionne de manière la plus adéquate le type de matériaux réfractaires selon les différentes zones de ce canal et selon la température du verre qui y circule. Ainsi, c'est dans l'avant-canal qu'il faut prévoir les matériaux réfractaires les plus résistants à la corrosion, aux hautes températures, tandis que dans les zones plus aval d'autres considérations peuvent être prises en compte.

Ce canal peut faire suite à tout type de compartiment de fusion, à flammes ou à fusion électrique, directement ou par l'intermédiaire de compartiments de transition. Cependant, le compartiment de fusion peut avantageusement déboucher directement dans le canal selon l'invention, puisque ce canal assure à la fois transfert et conditionnement.

En conclusion, le canal selon l'invention est de fonctionnement très économique car il autorise une absence de courant de retour sans diminuer la qualité du verre, l'inertie du four s'en trouvant diminuée.

Sa conception est relativement simple et le conditionnement qui y est réalisé est extrêmement modulable et s'adapte à la fabrication de tout type de verre, notamment de verres spéciaux puisqu'il permet de contrôler éventuellement très précisément la composition de l'atmosphère au-dessus du niveau de verre.

Toutes les précautions sont prises pour assurer un conditionnement au moins aussi bon qu'avec une structure du type corset/braise/canal. On peut noter d'ailleurs que la longueur du canal de l'invention peut être choisie très voisine de celle de la structure prémentionnée, ce qui peut permettre de moderniser des fours actuels à braise sans avoir à les remodeler entièrement.

## Revendications

1. Canal (1) d'écoulement/conditionnement de verre fondu, comprenant chenal et superstructure (5), et destiné à transférer le verre fondu d'une zone de fusion/affinage (6) de matières vitrifiables vers une zone de formage de verre fondu afin de l'amener de sa température de fusion à sa température de formage, **caractérisé en ce qu'**il comporte une pluralité de zones successives (8, 9, 10, 11, 12, 13, 14) disposées substantiellement transversalement par rapport à son axe longitudinal (X), chaque zone ayant sa fonction propre, étant régulée thermiquement de manière autonome et étant isolée sur une partie de sa hauteur par rapport aux zones adjacentes par des moyens de séparation (15), lesdites zones comprenant au moins une zone (8) de transition, au moins une zone de drainage (9), au moins une zone de refroidissement (10, 11, 12) et au moins une zone (13, 14) d'homogénéisation thermique et/ou chimique.

2. Canal (1) selon la revendication 1, **caractérisé en ce que** ses dimensions sont choisies de manière à éviter la formation d'une courroie de recirculation convective de verre fondu en direction de la zone (6) de fusion/affinage.

3. Canal (1) selon l'une des revendications précédentes, **caractérisé en ce que** les moyens de séparation (15) entre zones sont choisis parmi les écrans suspendus, les murs d'ombre, les arcs sur-baissés et les barrages suspendus partiellement immergés dans le verre fondu.

4. Canal (1) selon l'une des revendications précédentes, **caractérisé en ce que** la sole (2) du chenal (1) est sensiblement disposée selon un plan horizontal.

5. Canal (1) selon l'une des revendications précédentes, **caractérisé en ce qu**'il présente au moins une modification de section suivant son axe longitudinal (X), notamment à la jonction entre la zone la plus amont dite avant-canal qui est la zone de transition (8) et les zones suivantes (9).

6. Canal (1) selon la revendication 5, **caractérisé en ce que** la section de la zone de transition dite avant-canal (8), et notamment sa largeur, est supérieure à celle des zones suivantes (9).

7. Canal (1) selon l'une des revendications 5 ou 6, **caractérisé en ce que** l'avant-canal (8) est muni de moyens de drainage, moyens tels que des niches d'écrémage (17) du flux de verre fondu et notamment ses veines latérales, associées à des drains de surface et notamment disposées à l'extrémité de branche(s) d'écoulement (16) prévues de part et d'autre de l'avant-canal.

8. Canal (1) selon l'une des revendications 5 à 7, **caractérisé en ce que** l'avant-canal (8) est muni de moyens de chauffe, notamment de brûleurs disposés en rangées symétriques par rapport à l'axe longitudinal (X) du canal (1).

9. Canal (1) selon l'une des revendications précédentes, **caractérisé en ce qu'**il comporte une zone (9) dite de drainage, qui succède notamment à la zone dite avant-canal (8) et qui est munie de moyens de drainage du flux de verre fondu, notamment sa veine centrale, comprenant un drain de surface (20) éventuellement disposé à proximité d'un dispositif d'entraînement (19) immergé à mouvement de rotation lent.

10. Canal (1) selon la revendication 9, **caractérisé en ce que** la zone de drainage (9) comporte un barrage (18) partiellement immergé dans le verre fondu, notamment incliné d'un angle différent de 90° par rapport à l'axe longitudinal du canal (1), et disposé juste en aval du drain de surface (20).

11. Canal (1) selon l'une des revendications précédentes, **caractérisé en ce qu'**il comporte au moins une zone de refroidissement, de préférence trois zones (10, 11, 12) de refroidissement successives.

12. Canal (1) selon la revendication 11, **caractérisé en ce que** au moins une des zones (10, 11, 12) de refroidissement est ventilée, notamment par introduction puis circulation de gaz extérieur dans sa partie médiane, le long de l'axe longitudinal (X) du canal.

13. Canal (1) selon l'une des revendications 11 ou 12, **caractérisé en ce que,** au moins dans une des zones de refroidissement (10, 11, 12), au moins une des parois, notamment la voûte (5), est munie de moyens de refroidissement extérieurs sans ventilation.

14. Canal (1) selon la revendication 13, **caractérisé en ce que** la voûte (5) est refroidie par circulation d'un fluide, notamment de gaz, dans son épaisseur, notamment par cheminement dans une structure alvéolaire.

15. Canal (1) selon la revendication 14, **caractérisé en ce que** la circulation du fluide de refroidissement dans l'épaisseur de la voûte (5) s'effectue par au moins un point d'injection (21) extérieur approximativement au milieu de la voûte relié par des conduits à au moins deux points (22) d'évacuation.

16. Canal (1) selon l'une des revendications précédentes, **caractérisé en ce qu**'au moins une des zones qui le composent, et notamment au moins une des zones de refroidissement (10, 11, 12), est munie de moyens de réchauffage latéraux, notamment disposés soit sur les parois latérales, soit sur les côtés de la voûte.

17. Canal (1) selon la revendication 16, **caractérisé en ce que** les moyens de réchauffage sont choisis parmi les brûleurs, comme les brûleurs dits de rive ou les brûleurs dits à flamme plate, et les tubes radiants.

18. Canal (1) selon l'une des revendications précédentes, **caractérisé en ce que** la ou les zones de refroidissement (10, 11, 12) sont suivies par au moins une zone (13) d'homogénéisation thermique à isolation thermique renforcée, zone munie de moyens de conditionnement thermique visant à supprimer tout gradient thermique transversalement à l'axe longitudinal du canal (1).

19. Canal (1) selon la revendication 18, **caractérisé en ce que** les moyens de conditionnement thermique comportent un système de ventilation par un gaz à température régulée de manière appropriée.

20. Canal (1) selon l'une des revendications précédentes, **caractérisé en ce qu'**il comporte une zone (14) d'homogénéisation chimique et de drainage du verre, de préférence disposée le plus en aval du canal.

21. Canal (1) selon la revendication 20, **caractérisé en ce que** la zone d'homogénéisation (14) chimique et de drainage comporte un drain de fond, notamment constitué par une fente (24) pratiquée dans la sole (2) de préférence placée juste en amont d'un talon (25) disposé sur la sole.

22. Canal (1) selon la revendication 21, **caractérisé en ce que** la zone d'homogénéisation (14) comporte une pluralité d'agitateurs (26) disposés en aval du drain de fond.

23. Canal (1) selon la revendication 21 ou 22, **caractérisé en ce que** la zone d'homogénéisation (14) comporte un moyen de régulation de la perte de charge due à l'écoulement du verre, moyen constitué notamment d'un barrage (27) dont la profondeur d'immersion dans le verre est réglable et disposé en aval du drain de fond (24) et des agitateurs (26).

24. Canal (1) selon l'une des revendications précédentes, **caractérisé en ce qu**'il s'achève par une lèvre (7) de distribution de section réduite.

25. Four pour la fusion de matières vitrifiables comportant une zone (6) de fusion/affinage de matières vitrifiables et un canal (1) pour le transfert du verre vers une zone de formage afin de l'amener de sa température de fusion à sa température de formage, **caractérisé en ce que** ledit canal est un canal conforme à l'une des revendications précédentes.

26. Four selon la revendication 25, **caractérisé en ce que** la zone la plus amont dite avant-canal (8) du canal (1) présente une section intermédiaire entre celle du compartiment de fusion/affinage (6) et celle du reste du canal (9), et est séparée de ce dernier par un écran thermique (15).

27. Four selon l'une des revendications 25 ou 26, **caractérisé en ce que** l'ensemble de la sole (2) du canal est sur-élevé par rapport à celle du compartiment (6) de fusion/affinage.

28. Four selon l'une des revendications 25 à 27, **caractérisé en ce que** la chauffe dans le compartiment (6) de fusion/affinage est assurée par une pluralité de brûleurs fonctionnant à l'oxygène et sans inversion.

29. Utilisation du canal selon l'une des revendications 1 à 24 ou de four selon l'une des revendications 25 à 28, pour l'alimentation d'une installation de formage de verre plat du type float.

## Patentansprüche

1. Kanal (1) für das Fließen/Konditionieren von erschmolzenem Glas, welcher eine Rinne und einen Überbau (5) umfaßt und das geschmolzene Glas von einer Schmelz/Läuterungs-Zone (6) für Glasbildner zu einer Formgebungszone für das geschmolzene Glas befördern soll, um es von dessen Schmelztemperatur auf Formgebungstemperatur zu bringen, **dadurch gekennzeichnet, daß** er eine Vielzahl aufeinanderfolgender Zonen (8, 9, 10, 11, 12, 13, 14) umfaßt, die in bezug auf seine Längsachse (X) im wesentlichen quer angeordnet sind, wobei jede Zone ihre eigene Funktion hat, autonom thermisch geregelt wird und auf einem Teil ihrer Höhe in bezug auf die angrenzenden Zonen durch Trennmittel (15) isoliert ist, wobei diese Zonen mindestens eine Übergangszone (8), mindestens eine Abflußzone (9), mindestens eine Kühlzone (10, 11, 12) und mindestens eine Zone (13, 14) für die thermische und/oder chemische Homogenisierung enthalten.

2. Kanal (1) nach Anspruch 1, **dadurch gekennzeichnet, daß** seine Abmessungen derart gewählt werden, daß die Bildung einer konvektiven Rückströmung aus geschmolzenem Glas in Richtung der Schmelz/Läuterungs-Zone (6) verhindert wird.

3. Kanal (1) nach einem der vorhergehenden Ansprüche, **dadurch gekennzeichnet, daß** die Trennmittel (15) zwischen den Zonen aus Hängewänden, Schattenwänden, flachen Bögen und aufgehängten Wehren ausgewählt sind, die teilweise in das geschmolzene Glas eintauchen.

4. Kanal (1) nach einem der vorhergehenden Ansprüche, **dadurch gekennzeichnet, daß** die Sohle (2) des Kanals (1) im wesentlichen in einer horizontalen Ebene angeordnet ist.

5. Kanal (1) nach einem der vorhergehenden Ansprüche, **dadurch gekennzeichnet, daß** er in seiner Längsachse (X) mindestens eine Querschnittsveränderung, insbesondere in der Verbindung zwischen der als Vorkanal bezeichneten, in Strömungsrichtung hintersten Zone, welche die Übergangszone (8) ist, und den folgenden Zonen (9), aufweist.

6. Kanal (1) nach Anspruch 5, **dadurch gekennzeichnet, daß** der Querschnitt der als Vorkanal (8) bezeichneten Übergangszone und insbesondere ihre Breite größer als der der darauf folgenden Zonen (9) ist.

7. Kanal (1) nach Anspruch 5 oder 6, **dadurch gekennzeichnet, daß** der Vorkanal (8) mit Abzugseinrichtungen wie Abschöpfnischen (17) für den Glasschmelzfluß und insbesondere dessen seitliche strömungsschichten versehen ist, welche die Oberflächenabflüsse fortsetzen und insbesondere am Ende eines Strömungsabzweigs bzw. von Strömungsabzweigen (16), der/die auf beiden Seiten des Vorkanals vorgesehen ist/sind, angeordnet sind.

8. Kanal (1) nach einem der Ansprüche 5 bis 7, **dadurch gekennzeichnet, daß** der Vorkanal (8) mit Beheizungsmitteln, insbesondere Brennern, versehen ist, die in in bezug auf die Längsachse (X) des Kanals (1) symmetrischen Reihen angeordnet sind.

9. Kanal (1) nach einem der vorhergehenden Ansprüche, **dadurch gekennzeichnet, daß** er eine als Abfluß bezeichnete Zone (9) umfaßt, welche insbesondere auf die als Vorkanal bezeichnete Zone (8) folgt und mit Abflußeinrichtungen für den Glasschmelzfluß, insbesondere dessen mittlere Strömungsschicht, versehen ist, die einen Oberflächenabzug (20) enthalten, der gegebenenfalls in der Nähe einer mit einer langsamen Drehbewegung eintauchenden Antriebseinrichtung (19) angeordnet ist.

10. Kanal (1) nach Anspruch 9, **dadurch gekennzeichnet, daß** die Abflußzone (9) eine Absperrung (18) enthält, die in das geschmolzene Glas teilweise eintaucht, insbesondere mit einem Winkel geneigt ist, der sich in bezug auf die Längsachse des Kanals (1) von 90° unterscheidet, und unmittelbar nach dem Oberflächenabzug (20) angeordnet ist.

11. Kanal (1) nach einem der vorhergehenden Ansprüche, **dadurch gekennzeichnet, daß** er mindestens eine Kühlzone und vorzugsweise drei aufeinanderfolgende Kühlzonen (10, 11, 12) umfaßt.

12. Kanal (1) nach Anspruch 11, **dadurch gekennzeichnet, daß** wenigstens eine der Kühlzonen (10, 11, 12) belüftet ist, insbesondere indem ein von außen kommendes Gas eingeleitet und in ihrem mittleren Teil entlang der Längsachse (X) des Kanals strömen gelassen wird.

13. Kanal (1) nach Anspruch 11 oder 12, **dadurch gekennzeichnet**, **daß** wenigstens in einer der Kühlzonen (10, 11, 12) mindestens eine der Wände, insbesondere die Decke (5), mit äußeren Kühlmitteln ohne Belüftung versehen ist.

14. Kanal (1) nach Anspruch 13, **dadurch gekennzeichnet, daß** die Decke (5) gekühlt wird, indem in ihrer Dicke ein Fluid, speziell ein Gas, strömt, insbesondere indem es in einer Zellstruktur geführt wird.

15. Kanal (1) nach Anspruch 14, **dadurch gekennzeichnet, daß** die Strömung des Kühlfluids in der Dicke von Decke (5) durch mindestens eine äußere Zuleitungsstelle (21) erfolgt, die sich etwa in der Deckenmitte befindet und durch Leitungen mit mindestens zwei Ableitungsstellen (22) verbunden ist.

16. Kanal (1) nach einem der vorhergehenden Ansprüche, **dadurch gekennzeichnet, daß** wenigstens eine der Zonen, aus denen er besteht, und speziell wenigstens eine der Kühlzonen (10, 11, 12) mit seitlichen Beheizungsmitteln versehen ist, die insbesondere entweder an den Seitenwänden oder an den Deckenseiten angeordnet sind.

17. Kanal (1) nach Anspruch 16, **dadurch gekennzeichnet, daß** die Beheizungsmittel aus Brennern wie Kantenbrennern oder Schlitzbrennern und Strahlungsrohren ausgewählt sind.

18. Kanal (1) nach einem der vorhergehenden Ansprüche, **dadurch gekennzeichnet, daß** sich an die Kühlzone/n (10, 11, 12) mindestens eine Zone (13) mit verstärkter Wärmedämmung für die thermische Homogenisierung anschließt, welche mit Mitteln zur thermischen Konditionierung versehen ist, die darauf gerichtet ist, alle quer zur Längsachse des Kanals (1) aufgetretenen Wärmegradienten verschwinden zu lassen.

19. Kanal (1) nach Anspruch 18, **dadurch gekennzeichnet, daß** die Mittel für die thermische Konditionierung ein System zur Belüftung durch ein Gas enthalten, dessen Temperatur auf geeignete Weise geregelt wird.

20. Kanal (1) nach einem der vorhergehenden Ansprüche, **dadurch gekennzeichnet, daß** er eine Zone (14) für die chemische Homogenisierung und den Abfluß des Glases umfaßt, die vorzugsweise im Kanal am weitesten vorn angeordnet ist.

21. Kanal (1) nach Anspruch 20, **dadurch gekennzeichnet, daß** die Zone (14) für die chemische Homogenisierung und den Abfluß einen Bodenabfluß enthält, der insbesondere aus einem Schlitz (24) besteht, welcher in der Sohle (2) vorzugsweise unmittelbar hinter einem auf ihr angeordneten Ansatz (25) angebracht ist.

22. Kanal (1) nach Anspruch 21, **dadurch gekennzeichnet, daß** die Homogenisierungszone (14) eine Vielzahl von Rührern (26) enthält, die nach dem Bodenabfluß angeordnet sind.

23. Kanal (1) nach Anspruch 21 oder 22, **dadurch gekennzeichnet, daß** die Homogenisierungszone (14) ein Mittel zur Regelung des vom Fließen des Glases verursachten Druckverlustes enthält, das insbesondere aus einer Absperrung (27) besteht, deren Eintauchtiefe in das Glas einstellbar ist, und welches nach dem Bodenabfluß (24) und den Rührern (26) angeordnet ist.

24. Kanal (1) nach einem der vorhergehenden Ansprüche, **dadurch gekennzeichnet, daß** er in einer Gießmündung (7) mit verringertem Querschnitt ausläuft.

25. Ofen zum Schmelzen von Glasbildnern, welcher eine Schmelz/ Läuterungs-Zone für Glasbildner und einen Kanal (1) zur Beförderung des Glases zu einer Formgebungszone umfaßt, um es von dessen Schmelztemperatur auf Formgebungstemperatur zu bringen, **dadurch gekennzeichnet, daß** dieser Kanal ein Kanal gemäß einem der vorhergehenden Ansprüche ist.

26. Ofen nach Anspruch 25, **dadurch gekennzeichnet, daß** die als Vorkanal (8) des Kanals (1) bezeichnete hinterste Zone einen Querschnitt aufweist, der zwischen dem des Schmelz/ Läuterungs-Abteils (6) und dem des übrigen Kanals (9) liegt, und von letzterem durch eine Wärmewand (15) getrennt ist.

27. Ofen nach Anspruch 25 oder 26, **dadurch gekennzeichnet, daß** die gesamte Sohle (2) des Kanals in bezug auf die des Schmelz/Läuterungs-Abteils (6) erhöht ist.

28. Ofen nach einem der Ansprüche 25 bis 27, **dadurch gekennzeichnet, daß** die Erhitzung im Schmelz/LäuterungsAbteil (6) von einer Vielzahl von Brennern sichergestellt wird, die mit Sauerstoff und ohne Umkehr arbeiten.

29. Verwendung des Kanals nach einem der Ansprüche 1 bis 24 oder des Ofens nach einem der Ansprüche 25 bis 28 zur Versorgung einer Formgebungsanlage für Flachglas wie Floatglas.

## Claims

1. Molten glass flow/conditioning channel (1) comprising a channel member and superstructure (5) and serving to transfer the molten glass from a melting/refining area (6) for vitrifiable materials to a molten glass forming area in order to bring the glass from its melting temperature to its forming temperature, characterized in that it has a plurality of successive areas (8, 9, 10, 11, 12, 13, 14) arranged substantially transversely with respect to its longitudinal axis (X), each area having its own function, being autonomously thermally regulated and isolated over part of its height from adjacent areas by separating means (15), said areas having at least one transition area (8), at least one drainage area (9), at least one cooling area (10, 11, 12) and at least one thermal and/or chemical homogenization area (13, 14).

2. Channel (1) according to claim 1, characterized in that its dimensions are chosen in such a way to avoid the formation of a molten glass, convective recirculation belt running in the direction of the melting/refining area (6).

3. Channel (1) according to one of the preceding claims, characterized in that the separation means (15) between areas are chosen from among curtain walls, shadow walls, segmental arches and barriers suspended in a partly immersed manner in the molten glass.

4. Channel (1) according to one of the preceding claims, characterized in that the floor of the channel (1) is essentially arranged in accordance with a horizontal plane.

5. Channel (1) according to one of the preceding claims, characterized in that it has at least one cross-sectional modification along its longitudinal axis (X), particularly at the junction with the furthest upstream area known as the pre-channel, which is the transition area (8) and the following areas (9).

6. Channel (1) according to claim 5, characterized in that the cross-section of the transition area known as the pre-channel (8) and in particular its width exceeds that of the following areas (9).

7. Channel (1) according to one of the claims 5 or 6, characterized in that the pre-channel (8) is equipped with drainage means, means such as skim pockets (17) for the molten glass flow and in particular its lateral streams, associated with surface drains and in particular located at the end of the flow branch or branches (16) on either side of the pre-channel.

8. Channel (1) according to one of the claims 5 to 7, characterized in that the pre-channel (8) is equipped with heating means, particularly burners arranged in symmetrical rows with respect to the longitudinal axis (X) of the channel (1).

9. Channel (1) according to one of the preceding claims, characterized in that it has a so-called drainage area (9), which in particular follows the pre-channel area (8) and which is equipped with means for draining the molten glass flow, particularly its central stream, comprising a surface drain (20) optionally positioned in the vicinity of a drive device (19) which is immersed and slowly rotates.

10. Channel (1) according to claim 9, characterized in that the drainage area (9) has a barrier (18) partly immersed in the molten glass and in particular inclined by an angle differing from 90° with respect to the longitudinal axis of the channel (1) and positioned just downstream of the surface drain (20).

11. Channel (1) according to one of the preceding claims, characterized in that it has at least one and preferably three successive cooling areas (10, 11, 12).

12. Channel (1) according to claim 11, characterized in that at least one of the cooling areas (10, 11, 12) is ventilated, particularly by the introduction and then circulation of external gas in its median portion, along the longitudinal axis (X) of the channel.

13. Channel (1) according to one of the claims 11 or 12, characterized in that, at least in one of the cooling areas (10, 11, 12), at least one of the walls, particularly the main arch (5), is equipped with ventilation-free, external cooling means.

14. Channel (1) according to claim 13, characterized in that the main arch (5) is cooled by the circulation of a fluid, particularly gas, in its thickness, particularly by travel in a honeycomb structure.

15. Channel (1) according to claim 14, characterized in that the circulation of the cooling fluid in the thickness of the main arch (5) takes place by at least one external injection point (21) approximately in the centre of the main arch and connected by ducts to at least two discharge points (22).

16. Channel (1) according to one of the preceding claims, characterized in that at least one of the areas forming it and in particular at least one of the cooling areas (10, 11, 12) is equipped with lateral heating means, placed either on the side walls, or on the sides of the main arch.

17. Channel (1) according to claim 16, characterized in that the heating means are chosen from among burners, such as marginal burners or flat flame burners, and radiant tubes.

18. Channel (1) according to one of the preceding claims, characterized in that the cooling area or areas (10, 11, 12) are followed by at least one thermal homogenization area (13) having reinforced thermal insulation, said area being provided with thermal conditioning means for eliminating any heat gradient transversely to the longitudinal axis of the channel (1).

19. Channel (1) according to claim 18, characterized in that the thermal conditioning means incorporate a ventilation system by a gas at an appropriately regulated temperature.

20. Channel (1) according to one of the preceding claims, characterized in that it has a chemical homogenization and glass drainage area (14), preferably positioned as downstream as possible of the channel.

21. Channel (1) according to claim 20, characterized in that the chemical homogenization and drainage area (14) has a bottom drain, particularly constituted by a slot (24) made in the floor (2) and preferably just upstream of a heel (25) placed on the floor.

22. Channel (1) according to claim 21, characterized in that the homogenization area (14) has a plurality of stirrers (26) arranged downstream of the bottom drain.

23. Channel (1) according to claim 21 or 22, characterized in that the homogenization area (14) has a means for regulating the pressure drop due to the flow of glass, said means being more particularly constituted by a barrier (27), whose immersion depth in the glass is regulatable and which is positioned downstream of the bottom drain (24) and the stirrers (26).

24. Channel (1) according to one of the preceding claims, characterized in that it is completed by a distribution lip (7) having a reduced cross-section.

25. Furnace for melting vitrifiable materials incorporating a vitrifiable material melting/refining area (6) and a channel (1) for the transfer of the glass to a forming area in order to bring it from its melting temperature to its forming temperature, characterized in that said channel is a channel according to any one of the preceding claims.

26. Furnace according to claim 25, characterized in that the furthest upstream area or pre-channel (8) of the channel (8) has a cross-section intermediate between that of the melting/refining area (6) and that of the remainder of the channel (9) and is separated from the latter by a heat shield (15).

27. Furnace according to one of the claims 25 or 26, characterized in that the complete floor (2) of the channel is raised compared with that of the melting/refining area (6).

28. Furnace according to one of the claims 25 to 27, characterized in that heating in the melting/refining area (6) takes place by a plurality of burners operating with oxygen and without inversion.

29. Use of the channel according to one of the claims 1 to 24 or the furnace according to one of the claims 25 to 28 for supplying a float-type flat glass forming installation.
